# EUROPEAN PATENT APPLICATION

(11) **EP 4 576 395 A1**
(43) Date of publication of application: **25.06.2025**
(21) Application number: 23920383.9
(22) Date of filing: 08.02.2023
(51) Int. Cl.: H01M 50/502, H01M 50/543, H01M 50/536

(54) **BATTERY CELL, BATTERY, AND ELECTRIC DEVICE**

(71) Applicant: Contemporary Amperex Technology (Hong Kong) Limited, Hong Kong (HK)
(72) Inventor: CHEN, Xinxiang, Ningde, Fujian 352100 (CN); LIN, Denghua, Ningde, Fujian 352100 (CN); HUANG, Shoujun, Ningde, Fujian 352100 (CN); CHEN, Long, Ningde, Fujian 352100 (CN); WANG, Peng, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2023/074999
(87) International publication number: WO 2024/164175

(57) **Abstract**

The present application relates to the field of batteries. Provided are a battery cell, a battery, and an electric device. The battery cell comprises a housing, an electrode assembly, and an electrode terminal, wherein the housing has a wall portion, which is provided with a lead-out hole; the electrode assembly is accommodated in the housing; the electrode terminal comprises a first terminal portion and a second terminal portion, which are made of different materials and are compounded with each other; the first terminal portion passes through the lead-out hole, and the second terminal portion is electrically connected to the electrode assembly; the first terminal portion comprises a first limiting portion, and in the thickness direction of the wall portion, the first limiting portion is configured to limit the first terminal portion from being separated from the lead-out hole in a direction away from the electrode assembly; and when the first terminal portion is subjected to an outward pulling force, the first limiting portion can limit the electrode terminal from being separated from the lead-out hole. The compound interface between the first terminal portion and the second terminal portion is not easily affected by an external force, and the first terminal portion and the second terminal portion are not easily separated, such that the battery cell has a longer service life.

## Description

### Technical Field

The present disclosure relates to the field of battery, in particular to a battery cell, a battery, and an electrical equipment.

### Background Art

Batteries are widely used in the field of new energy, such as electric vehicles, new energy vehicles, etc. New energy vehicles and electric vehicles have become a new trend in the development of the automobile industry. The development of battery technology needs to consider multiple design factors simultaneously, such as energy density, discharge capacity, charging and discharging rate, and other performance parameters. In addition, it is also necessary to consider the service life of the battery. However, the service life of current batteries is relatively short.

### Summary

The object of the embodiments of the present disclosure is to provide a battery cell, a battery and an electrical equipment, which is intended to solve the problem of short service life of the battery in the related technology.

In the first aspect, the embodiments of the present disclosure provide a battery cell comprising a shell, an electrode assembly, and an electrode terminal, wherein the shell has a wall portion, and the wall portion is provided with a lead out hole; the electrode assembly is housed within the shell; and the electrode terminal comprises a first terminal portion and a second terminal portion, wherein the first terminal portion and the second terminal portion are made of different materials and are composite with each other; and the first terminal portion passes through the lead out hole, and the second terminal portion is electrically connected to the electrode assembly, wherein the first terminal portion comprises a first limit part, and along a thickness direction of the wall portion, the first limit part is configured to restrict the first terminal portion from leaving the lead out hole in a direction facing away from the electrode assembly.

In the above technical solution, the electrode terminal of the battery cell includes a first terminal portion and a second terminal portion of different materials, so as to weld the first terminal portion to the busbar component and the second terminal portion to the electrode assembly. The first terminal portion has a first limit part, which can restrict the first terminal portion from leaving the lead out hole in a direction facing away from the electrode assembly when subjected to an outward pulling force. In this way, the composite interface between the first terminal portion and the second terminal portion is less susceptible to external forces, thereby making it difficult for the first terminal portion and the second terminal portion to separate, and resulting in a longer lifespan of the battery cell.

As an optional technical solution for the embodiments of the present disclosure, along the thickness direction of the wall portion, the first limit part is located on a side of the wall portion facing the electrode assembly, and a projection of the first limit part and a projection of the wall portion at least partially overlap.

In the above technical solution, along the thickness direction of the wall portion, the first limit part is located on the side of the wall portion facing the electrode assembly. The projection of the first limit part overlaps at least partially with the projection of the wall portion, so that when the first terminal portion is subjected to an outward pulling force, the first limit part can be pressed against the wall portion to restrict the first terminal portion from leaving the lead out hole in a direction away from the electrode assembly. In this way, the composite interface between the first terminal portion and the second terminal portion is less susceptible to external forces, thereby making it difficult for the first terminal portion and the second terminal portion to separate, and resulting in a longer lifespan of the battery cell.

As an optional technical solution for the embodiments of the present disclosure, the first terminal portion and the second terminal portion are combined to form a composite interface, and the composite interface intersects with an outer surface of the electrode terminal at a boundary position; and the battery cell further comprises a sealing member, wherein the sealing member seals the boundary position.

In the above technical solution, due to the different materials of the first and second terminal portions, if the electrolyte enters the composite interface, chemical corrosion will occur. Therefore, by setting the sealing member to seal the boundary position, the risk of electrolyte entering the composite interface is reduced, thereby reducing the risk of chemical corrosion and improving the lifespan of battery cells.

As an optional technical solution for the embodiments of the present disclosure, a groove is provided on one side of the second terminal portion facing the first terminal portion, and the first limit part is at least partially accommodated in the groove, wherein a side surface of the groove is combined with an outer peripheral surface of the first limit part to form the composite interface.

In the above technical solution, a groove is provided on the side of the second terminal portion facing the first terminal portion, so as to form a composite interface by combining the groove side surface of the groove with the outer peripheral surface of the first limit part. In this way, the electrolyte can only enter the composite interface from the side of the second terminal portion facing away from the electrode assembly, thereby making it more difficult for the electrolyte to enter the composite interface and for the composite interface to be corroded by the electrolyte.

As an optional technical solution for the embodiments of the present disclosure, the second terminal portion comprises a first portion and a second portion, wherein along the thickness direction, the first portion is stacked with the first terminal portion, and the second portion surrounds the first limit part; the first portion and the second portion jointly define the groove; and the sealing member is at least partially located between the second portion and the wall portion to seal the boundary position by the sealing member.

In the above technical solution, the electrolyte can only enter the boundary position through the gap between the second portion and the wall portion. Therefore, by setting the sealing member at least partially between the second portion and the wall portion, the electrolyte cannot enter the boundary position through the gap between the second portion and the wall portion, thus achieving sealing for the boundary position.

As an optional technical solution for the embodiments of the present disclosure, a portion of the sealing member is located between the first limit part and the wall portion, so that the sealing member covers the boundary position.

In the above technical solution, the sealing member is partially located between the first limit part and the wall portion, and the sealing member is partially located between the second portion and the wall portion, thus covering the boundary position and achieving better sealing effect at the boundary position.

As an optional technical solution for the embodiments of the present disclosure, a portion of the sealing member extends into the lead out hole.

In the above technical solution, the part of the sealing member extends into the lead out hole, which can provide positioning effect for the sealing member to facilitate its installation. On the other hand, it can also seal the first terminal portion and the wall portion.

As an optional technical solution for the embodiments of the present disclosure, along the thickness direction, the first limit part has a first surface facing the wall portion, and a first outer edge of the first surface is arranged around the lead out hole; the second portion has a second surface facing the wall portion, and a second outer edge of the second surface is arranged around the composite interface; and a minimum distance between the first outer edge and a wall surface of the lead out hole along a direction perpendicular to the thickness direction is A, and a minimum distance between the second outer edge and the composite interface is B, satisfying a condition of A/B ≥ 1/3.

In the above technical solution, along the direction perpendicular to the thickness direction, the minimum distance between the first outer edge and the hole wall surface of the lead out hole is greater than or equal to one-third of the minimum distance between the second outer edge and the composite interface. When the first terminal portion is subjected to an outward pulling force, the second portion can also abut against the sealing member, thereby sharing the force on the first limit part and further reducing the risk of deformation of the first limit part. In addition, A/B ≥ 1/3 ensures that the first limit part is not too small, thereby giving it high strength to resist deformation.

As an optional technical solution for the embodiments of the present disclosure, the first surface and the second surface are flush.

In the above technical solution, when the first surface and the second surface are flush, the composite interface is less susceptible to external forces, and the first terminal portion and the second terminal portion are not easily separated, resulting in a longer lifespan of the battery cell.

As an optional technical solution of the embodiments of the present disclosure, the sealing member comprises a first sealing portion, wherein the first sealing portion is located between the second portion and the wall portion along the thickness direction; and a minimum distance between an outer peripheral surface of the first sealing portion and the composite interface in a direction perpendicular to the thickness direction is C, which satisfies a condition of C ≥ 1mm.

In the above technical solution, in order to match the first sealing portion with the insulating member, a notch may be provided on the first sealing portion. By making C ≥ 1mm, the first sealing portion can ensure good sealing effect, reduce the risk of electrolyte entering the composite interface, and extend the service life of the battery cell.

As an optional technical solution for the embodiments of the present disclosure, the sealing member comprises a first sealing portion located between the second portion and the wall portion; and the first sealing portion has a third surface facing the wall portion and a fourth surface facing the second portion, with a third outer edge of the third surface surrounding the composite interface and a fourth outer edge of the fourth surface surrounding the third outer edge.

In the above technical solution, the edge of the first sealing portion may form a stepped, inclined, or curved surface to facilitate coordination with the insulating member. By setting the fourth outer edge around the third outer edge, the area of the fourth surface is larger than that of the third surface, such that the sealing effect can be improved to a certain extent.

As an optional technical solution for the embodiments of the present disclosure, along the thickness direction, the first limit part has a first surface facing the wall portion, and a first outer edge of the first surface is arranged around the lead out hole; and along a direction perpendicular to the thickness direction, a minimum distance between the first outer edge and a wall surface of the lead out hole is A, which satisfies a condition of A ≥ 1mm.

In the above technical solution, the minimum distance between the first outer edge and the wall surface of the lead out hole in the direction perpendicular to the thickness direction is greater than or equal to 1mm to ensure that the projection of the first limit part and the projection of the wall portion have sufficient overlap area along the thickness direction of the wall portion. When the first terminal portion is subjected to an outward pulling force, the first limit part can have sufficient area to abut against the wall portion to restrict the electrode terminal from detaching from the lead out hole. If A<1mm, when the first terminal portion is subjected to an outward pulling force, the area of the first limit part abutting against the wall portion is small, and the first limit part may deform, thereby causing the electrode terminal to detach from the lead out hole.

As an optional technical solution for the embodiments of the present disclosure, the first terminal portion comprises a body part, wherein the body part passes through the lead out hole, and the first limit part protrudes from an outer peripheral surface of the body part.

In the above technical solution, by making the first limit part protrude from the outer peripheral surface of the body part, it is not easy to weaken the strength of the body part, so that the first terminal portion is not easily damaged when subjected to external forces.

As an optional technical solution for the embodiments of the present disclosure, the first terminal portion further comprises a body part and a second limit part, wherein the body part passes through the lead out hole, and the body part connects the first limit part and the second limit part; and along the thickness direction, the first limit part and the second limit part are located on both sides of the wall portion respectively, and a projection of the second limit part overlaps at least partially with a projection of the wall portion.

In the above technical solution, the body part is connected to the first limit part and the second limit part. The first limit part can restrict the electrode terminal from leaving the lead out hole in the direction away from the electrode assembly, and the second limit part can restrict the electrode terminal from leaving the lead out hole in the direction towards the electrode assembly. In this way, the risk of electrode terminal detaching from the lead out hole is reduced, which is beneficial for ensuring the normal output or input of electrical energy to the battery cell, resulting in a longer lifespan of the battery cell.

As an optional technical solution of the embodiments of the present disclosure, the battery cell comprises a sealing member, wherein the sealing member is located at least partially on a side of the wall portion facing the electrode assembly along the thickness direction of the wall portion, and a projection of the sealing member overlaps at least partially with a projection of the wall portion; and the first limit part is located on a side of the sealing member facing the electrode assembly, and a projection of the first limit part overlaps at least partially with the projection of the sealing member.

In the above technical solution, when the first terminal portion is subjected to an outward pulling force, the first limit part can be pressed against the sealing member, and the sealing member can be pressed against the wall portion to restrict the first terminal portion from detaching from the lead out hole in the direction away from the electrode assembly. In this way, the composite interface between the first terminal portion and the second terminal portion is less susceptible to external forces, thereby making it difficult for the first terminal portion and the second terminal portion to separate, and resulting in a longer lifespan of the battery cell. The sealing member not only abuts against and limits the first limit part, but also seals the first terminal portion and the wall portion. One component achieves multiple functions, which is beneficial for simplifying the structure of the battery cell.

As an optional technical solution for the embodiments of the present disclosure, the projection of the first limit part and the projection of the wall portion do not overlap along the thickness direction.

In the above technical solution, along the thickness direction, the projection of the first limit part partially overlaps with the projection of the sealing member, the projection of the sealing member partially overlaps with the projection of the wall portion, and the projection of the first limit part does not overlap with the projection of the sealing member. In this way, the size of the first limit part can be reduced.

As an optional technical solution for the embodiments of the present disclosure, along the thickness direction, the first limit part is located on a side of the sealing member facing the electrode assembly.

In the above technical solution, the first limit part is set on the side of the sealing member facing the electrode assembly. When the first terminal portion is subjected to an outward pulling force, the first limit part can more stably support the sealing member.

In the second aspect, the embodiment of the present disclosure also provides a battery, including aforementioned battery cell.

In the third aspect, the embodiment of the present disclosure also provides an electrical equipment, comprising the above-mentioned battery, wherein the battery is used to provide electrical energy to the electrical equipment.

### Brief Description of Drawings

In order to more clearly illustrate technical solutions of embodiments of the present disclosure, drawings required for use in the embodiments will be described briefly below. It should be understood that the following drawings are merely illustrative of some embodiments of the present disclosure, which therefore should not be understood as a limitation to the scope. For those of ordinary skill in the art, other related drawings can also be obtained according to these drawings without any inventive effort.
FIG. 1 is a schematic view of the structure of the vehicle provided in some embodiments of the present disclosure;
FIG. 2 is an exploded view of the battery provided in some embodiments of the present disclosure;
FIG. 3 is a schematic view of a structure of the battery cell provided in some embodiments of the present disclosure;
FIG. 4 is an exploded view of the battery cell provided in some embodiments of the present disclosure;
FIG. 5 is a schematic view of the structure of the end cover provided in some embodiments of the present disclosure;
FIG. 6 is a schematic top view of the end cover provided in some embodiments of the present disclosure;
FIG. 7 is a sectional view at position D-D shown in FIG. 6;
FIG. 8 is an enlarged view at position E shown in FIG. 7;
FIG. 9 is a schematic top view of the end cover provided in some other embodiments of the present disclosure;
FIG. 10 is a sectional view at position F-F shown in FIG. 9;
FIG. 11 is an enlarged view at position G shown in FIG. 10;
FIG. 12 is a sectional view of the end cover provided in some other embodiments of the present disclosure;
FIG. 13 is a schematic top view of the end cover provided in some other embodiments of the present disclosure;
FIG. 14 is a sectional view at position H-H shown in FIG. 13; and
FIG. 15 is an enlarged view at position I shown in FIG. 14.

Reference sign: 10-box; 11-upper box; 12-lower box; 20-battery cell; 21-shell; 211-wall portion; 212-end cover; 2121-lead out hole; 213-casing; 214-insulating member; 22-electrode assembly; 221-tab; 23-electrode terminal; 231-first terminal portion; 2312-body part; 2313-second limit part; 2311-first limit part; 232-second terminal portion; 2321-first portion; 2322-second portion; 233-conductive member; 24-sealing member; 241-third sealing portion; 242-second sealing portion; 243-first sealing portion; 100-battery; 200-controller; 300-motor; 1000-vehicle.

### Detailed Description of Embodiments

In order to make the objectives, technical solutions and advantages of the embodiments of the present disclosure clearer, the technical solutions in the embodiments of the present disclosure will be described clearly below with reference to the drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

Unless otherwise defined, all technical and scientific terms used in the present disclosure have the same meanings as those commonly understood by those skilled in the art to which the present disclosure belongs. The terms used in the description of the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions. The terms "first", "second", etc. in the description and the claims of the present disclosure or the drawings are used to distinguish different objects, rather than describing specific sequences or primary and secondary relationships.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment.

In the description of the present disclosure, it should be noted that unless otherwise explicitly specified and defined, the terms "install", "link", "connect" and "attach" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing terms in the present disclosure may be understood according to specific circumstances.

The term "and/or" in the present disclosure is only a description for the association relationship of the associated object, indicating that there can be three types of relationships. For example, A and/or B can indicate three conditions: the presence of only A, the presence of both A and B, and the presence of only B. In addition, the character "/" in the present disclosure generally indicates that the associated objects before and after have an "or" relationship.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The term "multiple (a plurality of)" in the present disclosure refers to two or more (including two).

In the present disclosure, the battery cell can include a lithium ion secondary battery, a lithium ion primary battery, a lithium sulfur battery, a sodium lithium ion battery, a sodium ion battery or a magnesium ion battery, etc., which is not limited by the embodiments of the present disclosure. The battery cell can be cylindrical, flat, or rectangular, or be of other shapes, which is also not limited by the embodiments of the present disclosure. Battery cells are generally divided into three types according to the packaging method: cylindrical battery cell, square battery cell, and soft pack battery cell, which is also not limited by the embodiments of the present disclosure.

The battery mentioned in the embodiments of the present disclosure refers to a single physical module that includes one or more battery cells to provide higher voltage and capacity. For example, the batteries mentioned in the present disclosure may include battery modules or battery packs, etc. The battery generally includes a box used to encapsulate one or more battery cells. The box can prevent liquids or other foreign objects from affecting the charging or discharging of battery cells.

The battery cell includes an electrode assembly and an electrolyte, and the electrode assembly is composed of a positive electrode plate, a negative electrode plate, and a separator. Battery cells mainly rely on metal ions moving between the positive and negative electrode plates to operate. The positive electrode plate includes a positive electrode current collector and a positive electrode active substance layer. The positive electrode active substance layer is coated on the surface of the positive electrode current collector, and the positive electrode current collector without the positive electrode active substance layer protrudes from the positive electrode current collector coated by the positive electrode active substance layer. The positive electrode current collector without the positive electrode active substance layer is used as the positive tab. Taking lithium ion batteries as an example, the material for the positive electrode current collector can be aluminum, and the active substance of the positive electrode can be lithium cobalt oxide (lithium cobaltate), lithium iron phosphate, ternary lithium, or lithium manganese oxide (lithium manganate). The negative electrode plate includes a negative electrode current collector and a negative electrode active substance layer. The negative electrode active substance layer is coated on the surface of the negative electrode current collector, and the negative electrode current collector without the negative electrode active substance layer protrudes from the negative electrode current collector coated by the negative electrode active substance layer. The negative electrode current collector without the negative electrode active substance layer is used as the negative tab. The material for the negative electrode current collector can be copper, and the active substance of the negative electrode can be carbon, silicon or the like. In order to ensure that fusing does not occur under a high current, multiple positive tabs are provided and stacked together, and multiple negative tabs are provided and stacked together. The material of the separator can be PP (polypropylene) or PE (polyethylene), etc. In addition, the electrode assembly can be of a wound structure or a laminated structure (stacked structure), which is not limited by the embodiments of the present disclosure.

At present, based on the development of the market situation, the application of batteries is becoming increasingly widespread. Batteries are not only used in energy storage power systems such as hydropower, firepower, wind power, and solar power plants, but also widely used in electric vehicles such as electric bicycles, electric motorcycles, and electric cars, as well as in various fields such as military equipment and aerospace. With the continuous expansion of battery application fields, the market demand is also constantly expanding.

The development of battery technology needs to consider multiple design factors simultaneously, such as energy density, discharge capacity, charging and discharging rate, and other performance parameters. In addition, it is also necessary to consider the service life of the battery. However, the service life of current batteries is relatively short.

The inventor noticed that metals of the same material are easier to weld. The electrode terminal includes a first terminal portion and a second terminal portion, and the material of the first terminal portion is different from that of the second terminal portion. The material of the first terminal portion can be the same as that of the busbar component to facilitate welding with the busbar component. The material of the second terminal portion can be the same as that of the current collector component, in order to facilitate welding with the current collector component. The first terminal portion and the second terminal portion are combined together and set on the end cover.

The inventor further found that for electrode terminals in prior art, the first terminal portion is easily subjected to external forces. When the first terminal portion is subjected to outward tensile force, the second terminal portion will press against the end cover, causing the second terminal portion to experience inward reaction force. The position where the first terminal portion and the second terminal portion are combined is relatively fragile. When the first terminal portion is pulled outward by external force and the second terminal portion is pulled inward by reaction force, the first terminal portion and the second terminal portion are easily disconnected at the composite position, thereby causing damage to the battery cell and shortening the lifespan of battery cell 20.

In view of this, the embodiment of the present disclosure provides a battery cell comprising a shell, an electrode assembly, and an electrode terminal. The shell has a wall portion, which is provided with a lead out hole. The electrode assembly is housed inside the shell. The electrode terminal includes a first terminal portion and a second terminal portion, wherein the first terminal portion and the second terminal portion are made of different materials and are composite with each other. The first terminal portion penetrates through the lead out hole, and the second terminal portion is electrically connected to the electrode assembly. The first terminal portion includes a first limit part, which is located on the side of the wall portion facing the electrode assembly along the thickness direction of the wall portion. The projection of the first limit part and the projection of the wall portion at least partially overlap.

The electrode terminal of the battery cell includes a first terminal portion and a second terminal portion of different materials, so as to weld the first terminal portion to the busbar component and the second terminal portion to the electrode assembly. Along the thickness direction of the wall portion, the first terminal portion has the first limit part located on the side of the wall portion facing the electrode assembly. The projection of the first limit part overlaps at least partially with the projection of the wall portion, so that when the first terminal portion is subjected to an outward pulling force, the first limit part can be pressed against the wall portion (it can be pressed against the wall portion by some intermediate component) to restrict the first terminal portion from leaving the lead out hole in a direction away from the electrode assembly. In this way, the composite interface between the first terminal portion and the second terminal portion is less susceptible to external forces, thereby making it difficult for the first terminal portion and the second terminal portion to separate, and resulting in a longer lifespan of the battery cell.

The technical solution described in the embodiments of the present disclosure is applicable to batteries and electrical equipment using batteries.

The electrical equipment can be a vehicle, a mobile phone, a portable device, a notebook computer, a ship, a spacecraft, an electric toy, an electric tool, and the like. The spacecraft includes an aircraft, a rocket, a space shuttle, a spacecraft, and the like. The electric toys include a stationary or mobile electric toy, such as a game console, an electric vehicle toy, an electric ship toy, an electric airplane toy, and the like. The electric tools include a metal cutting electric tool, a grinding electric tool, an assembly electric tool, and an electric tool for railways, such as an electric drill, an electric grinder, an electric wrench, an electric screwdriver, an electric hammer, an electric impact drill, a concrete vibrator, and an electric planer. The foregoing electrical equipment is not specially limited in the embodiment of the present disclosure.

For ease of description, the following embodiments will be described by taking an electrical equipment being a vehicle 1000 as an example.

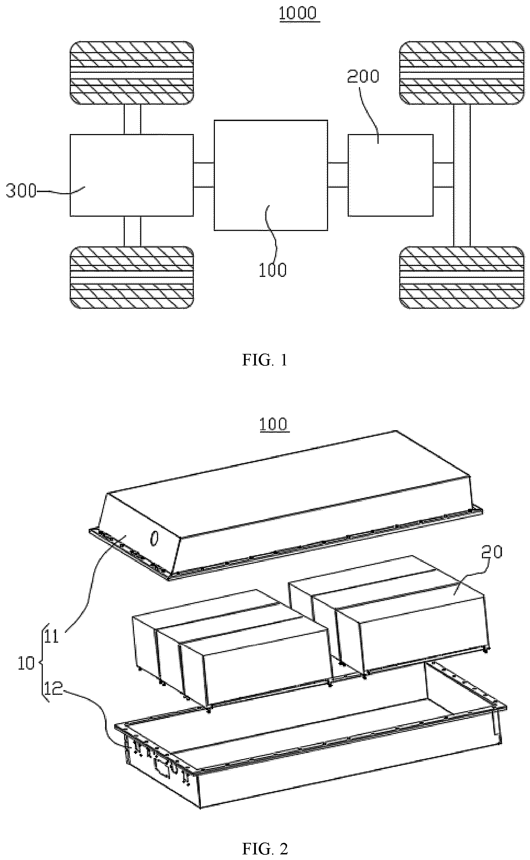

Referring to FIG. 1, FIG. 1 is a structural schematic view of the vehicle 1000 provided in some embodiments of the present disclosure. The vehicle 1000 can be a fuel powered vehicle, a gas powered vehicle, or a new energy vehicle. The new energy vehicle can be a pure electric vehicle, a hybrid electric vehicle, or an extended range vehicle, etc. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000. The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present disclosure, the battery 100 can not only serve as the operating power source for vehicle 1000, but also as the driving power source for vehicle 1000, thereby replacing or partially replacing fuel or natural gas to provide driving power for vehicle 1000.

Referring to FIG. 2, FIG. 2 is an explosion view of the battery 100 provided in some embodiments of the present disclosure. The battery 100 includes a box 10 and a battery cell 20, which is accommodated within the box 10. In the above, the box 10 is used to provide accommodating space for the battery cell 20, and the box 10 can be of various structures. In some embodiments, the box 10 may include an upper box 11 and a lower box 12, with the upper box 11 and the lower box 12 covering each other. The upper box 11 and the lower box 12 together define an accommodating space for accommodating battery cells 20. The lower box 12 can be in a hollow structure with an opening at one end, the upper box 11 can be in a plate-shaped structure, and the upper box 11 is covered on the opening side of the lower box 12 to jointly define the accommodating space by the upper box 11 and the lower box 12. The upper box 11 and the lower box 12 can also both be in hollow structure with an opening on one side, and the opening side of the upper box 11 is covered on the opening side of the lower box 12. Of course, the box 10 formed by the upper box 11 and the lower box 12 can be of various shapes, such as cylinder, cuboid, etc.

In the battery 100, the battery cells 20 can be multiple, and multiple battery cells 20 can be connected in series, parallel, or hybrid. Hybrid connection means that both series connection and parallel connection exist among multiple battery cells 20. Multiple battery cells 20 can be directly connected in series, parallel, or hybrid together, and then the whole composed of multiple battery cells 20 can be accommodated in the box 10. Of course, the battery 100 can also be in the form of a battery module composed of multiple battery cells 20 that are first connected in series, parallel, or hybrid. Multiple battery modules are then connected in series, parallel, or hybrid to form a whole and accommodated in the box 10. The battery 100 may also include other structures, for example, the battery 100 may also include a busbar component for achieving electrical connection between multiple battery cells 20.

In the above, each battery cell 20 can be a secondary battery cell or a primary battery cell; and can also be a lithium sulfur battery cell, sodium ion battery cell, or magnesium ion battery cell, but is not limited thereto. The battery cell 20 can be cylindrical, flat, or rectangular, or be of other shapes.

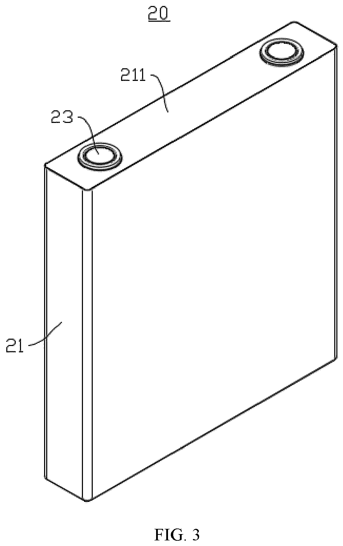

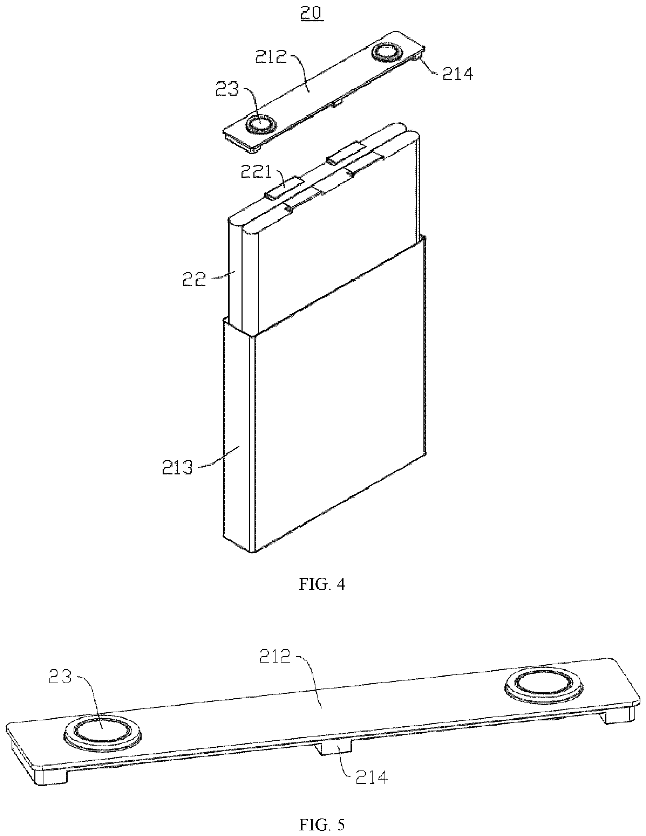

Referring to FIGS. 3 and 4, FIG. 3 is an explosion view of the battery cell 20 provided in some embodiments of the present disclosure. FIG. 4 is an exploded view of the battery cell 20 provided in some embodiments of the present disclosure. Battery cell 20 refers to the smallest unit that constitutes the battery 100. As shown in FIGS. 3 and 4, the battery cell 20 includes a shell 21 and electrode assembly 22.

The shell 21 includes an end cover 212 and a casing 213. The casing 213 has an opened accommodating space at one end, which is used to accommodate the electrode assembly 22. The end cover 213 is connected to the casing 213 and closes the opening.

The end cover 212 refers to a component that covers the opening of the casing 213 to isolate the internal environment of the battery cell 20 from the external environment. Without limitation, the shape of the end cover 212 can adapt to the shape of the casing 213 to fit the casing 213. Optionally, the end cover 212 can be made of a material with a certain hardness and strength (such as aluminum alloy), so that the end cover 212 is less prone to deformation when subjected to compression and collision, thereby enabling the battery cell 20 to have higher structural strength and improved safety performance. The material of the end cover 212 can also be various, such as copper, iron, aluminum, stainless steel, aluminum alloy, plastic, etc. The embodiments of the present disclosure do not make special limitations on this. Optionally, the battery cell 20 also includes a pressure relief mechanism, which is located on the end cover 212. The pressure relief mechanism is used to open when the internal pressure or temperature of the battery cell 20 reaches the detonation pressure, in order to release the internal pressure of the battery cell 20. In some embodiments, the battery cell 20 also includes an insulating member 214. The insulating member 214 is arranged on the inner side of the end cover 212, and the insulating member 214 can be used to isolate the electrical connection parts inside the casing 213 from the end cover 212, in order to reduce the risk of short circuit. For example, the insulating member 214 can be made of plastic, rubber, or the like.

The casing 213 is a component used to cooperate with the end cover 212 to form an internal environment of the battery cell 20, wherein the formed internal environment can be used to accommodate the electrode assembly 22, electrolyte, and other components. The casing 213 and the end cover 212 can be independent components, the opening can be set on the casing 213, and the internal environment of the battery cell 20 can be formed by making the end cover 212 cover on the opening at the opening. Without limitation, it is also possible to integrate the end cover 212 and the casing 213. Specifically, the end cover 212 and the casing 213 can form one common connection surface before other components enter the casing. When it is necessary to encapsulate the interior of the casing 213, the end cover 212 can then cover the casing 213. The casing 213 can be of various shapes and sizes, such as a cuboid, cylinder, hexagonal prism, etc. Specifically, the shape of casing 213 can be determined based on the specific shape and size of electrode assembly 22. The material of casing 213 can be various, such as copper, iron, aluminum, stainless steel, aluminum alloy, plastic, etc. The embodiments of the present disclosure do not make special limitations on this.

The electrode assembly 22 is a component in the battery cell 20 that undergoes electrochemical reactions. The shell 21 may contain one or more electrode assemblies 22. The electrode assembly 22 is mainly formed by winding or stacking the positive and negative electrode plates, and usually has a separator between the positive and negative electrode plates.

In some embodiments, electrode assembly is equipped with an tab, which can lead current out from electrode assembly. The tab includes the positive tab and the negative tab. The positive and negative electrode tabs can be located at one end of the electrode assembly together or at both ends of the electrode assembly, respectively.

In some embodiments, at least one electrode terminal is provided on the shell, and the electrode terminal is electrically connected to the tab. The electrode terminal can be directly connected to the tab or indirectly connected to the tab through a current collector component. The electrode terminal can be set on the end cover or on the casing.

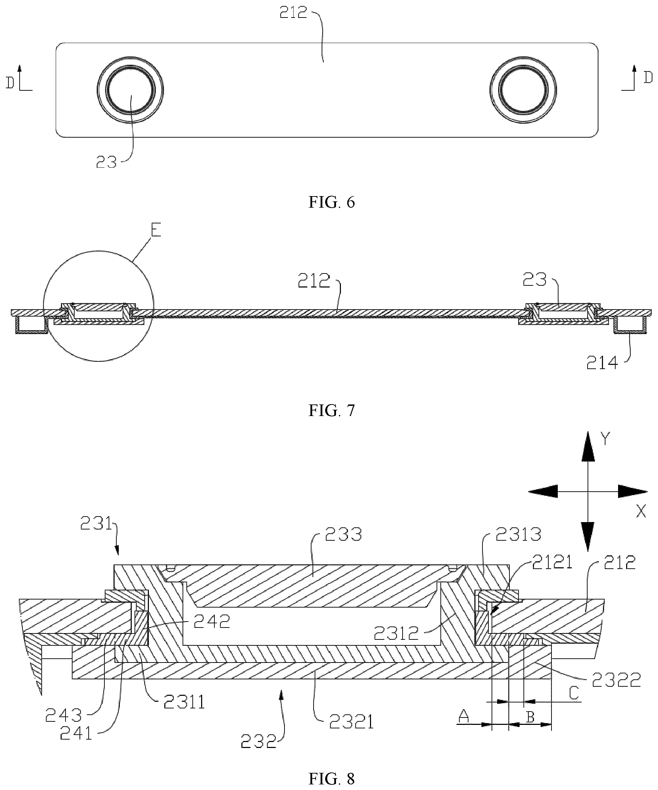

Referring to FIGS. 3, 4, 5, 6, 7, and 8, FIG. 5 is a structural schematic view of the end cover 212 provided in some embodiments of the present disclosure. FIG. 6 is a schematic top view of the end cover 212 provided in some embodiments of the present disclosure. FIG. 7 is a sectional view at position D-D shown in FIG. 6. FIG. 8 is an enlarged view at position E shown in FIG. 7. The embodiment of the present disclosure provides a battery cell 20 comprising a shell 21, an electrode assembly 22, and an electrode terminal 23. The shell 21 has a wall portion 211, which is provided with a lead out hole 2121. The electrode assembly 22 is housed inside the shell 21. The electrode terminal 23 includes a first terminal portion 231 and a second terminal portion 232, wherein the first terminal portion 231 and the second terminal portion 232 are made of different materials and are composite with each other. The first terminal portion 231 penetrates through the lead out hole 2121, and the second terminal portion 232 is electrically connected to the electrode assembly 22. The first terminal portion 231 includes a first limit part 2311, which is configured to restrict the first terminal portion 231 from leaving the lead out hole 2121 in a direction away from the electrode assembly 22 along the thickness direction of the wall portion 211.

The shell 21 has multiple walls, such as a bottom wall, side walls, top wall, etc. Wall portion 211 specifically refers to the wall equipped with electrode terminals 23. For example, if the bottom wall is provided with electrode terminals 23, then the wall portion 211 refers to the bottom wall of the casing 213. For example, if the top wall is provided with electrode terminals 23, then the wall portion 211 refers to the top wall of the casing 213. For example, if one side wall is provided with electrode terminals 23, then the wall portion 211 refers to that side wall. For example, the end cover 212 is provided with electrode terminals 23, and the wall portion 211 can also refer to the end cover 212. In other words, the wall portion 211 can be either the wall on the casing 213 or the end cover 212. In this embodiment, the electrode terminal 23 is set on the end cover 212 as an example for explanation, that is, in this embodiment, the end cover 212 is the wall portion 211.

The lead out hole 2121 is a through hole formed in the wall portion 211. The lead out hole 2121 is used to set the electrode terminal 23, which is connected to the electrode assembly 22 located inside the shell 21 and the busbar component located outside the shell 21 through the lead out hole 2121.

The electrode terminal 23 is arranged on wall portion 211. The electrode terminal 23 can be electrically connected to the electrode assembly 22 for outputting or inputting electrical energy from the battery cell 20.

The first terminal portion 231 is the part of the electrode terminal 23 used for connecting with the busbar component. The material of the first terminal portion 231 can be the same as that of the busbar component to facilitate welding with the busbar component. For example, the material of the first terminal portion 231 can be aluminum. Optionally, a conductive member 233 is provided at one end of the first terminal portion 231 facing away from the second terminal portion 232 along the thickness direction. By setting the conductive member 233 and connecting it to the busbar component by the conductive member 233, the connection area between the first terminal portion 231 and the busbar component is increased, thereby improving the stability of the connection.

The second terminal portion 232 is the part of the electrode terminal 23 used to connect with the electrode assembly 22. The material of the second terminal portion 232 can be the same as that of the current collector component or the tab 221, in order to facilitate welding with the current collector component or the tab 221. For example, the material of the second terminal portion 232 can be copper.

The difference in material between the first terminal portion 231 and the second terminal portion 232 refers to the fact that the first terminal portion 231 and the second terminal portion 232 belong to different metal materials or metal alloys. For the same metal alloy with different components, it can be considered that the materials are the same.

Composite can be achieved through methods such as solid-liquid phase combining, solid phase combining, laminated hot rolling, diffusion pressing, surfacing, and surfacing hot rolling.

The first limit part 2311 is a part of the first terminal portion 231. The first limit part 2311 is located inside the shell 21. In this way, along the thickness direction of the wall portion 211, the first limit part 2311 can be arranged opposite to the wall portion 211 or other components, so that when the first terminal portion 231 is subjected to an outward pulling force, the first limit part 2311 can be pressed against the wall portion 211 or other components, thereby restricting the first terminal portion 231 from detaching from the lead out hole 2121 in a direction away from the electrode assembly 22.

The thickness direction of wall portion 211 can be the Y direction as shown in FIG. 8.

The electrode terminal 23 of the battery cell 20 includes a first terminal portion 231 and a second terminal portion 232 of different materials, so as to weld the first terminal portion 231 to the busbar component and the second terminal portion 232 to the electrode assembly 22. The first terminal portion 231 has a first limit part 2311, which can restrict the first terminal portion 231 from leaving the lead out hole 2121 in a direction facing away from the electrode assembly 22 when subjected to an outward pulling force. In this way, the composite interface between the first terminal portion 231 and the second terminal portion 232 is less susceptible to external forces, thereby making it difficult for the first terminal portion 231 and the second terminal portion 232 to separate, and resulting in a longer lifespan of the battery cell 20.

Referring to FIGS. 3, 4, 5, 6, 7, and 8, in some embodiments, along the thickness direction of the wall portion 211, the first limit part 2311 is located on the side of the wall portion 211 facing the electrode assembly 22. The projection of the first limit part 2311 overlaps at least partially with the projection of the wall portion 211.

The projection of the first limit part 2311 at least partially overlaps with the projection of the wall portion 211, which includes partial overlap between the projection of the first limit part 2311 and the projection of the wall portion 211 and complete overlap between the projection of the first limit part 2311 and the projection of the wall portion 211. For the complete overlap between the projection of the first limit part 2311 and the projection of the wall portion 211, it can also be understood that along the thickness direction, the projection of the first limit part 2311 on the wall portion 211 completely falls within the wall portion 211.

Along the thickness direction of the wall portion 211, the first limit part 2311 is located on the side of the wall portion 211 facing the electrode assembly 22. The projection of the first limit part 2311 overlaps at least partially with the projection of the wall portion 211, so that when the first terminal portion 231 is subjected to an outward pulling force, the first limit part 2311 can abut against the wall portion 211 (wherein the first limit part 2311 can directly abut against the wall portion 211, or indirectly abut against the wall portion 211 through some intermediate components), to limit the first terminal portion 231 from leaving the lead out hole 2121 in the direction away from the electrode assembly 22. In this way, the composite interface between the first terminal portion 231 and the second terminal portion 232 is less susceptible to external forces, thereby making it difficult for the first terminal portion 231 and the second terminal portion 232 to separate, and resulting in a longer lifespan of the battery cell 20.

Referring to FIGS. 3, 4, 5, 6, 7, and 8, in some embodiments, along the thickness direction, the first limit part 2311 has a first surface facing the wall portion 211, and the first outer edge of the first surface is arranged around the lead out hole 2121. The minimum distance between the first outer edge and the wall surface of the lead out hole 2121 along the direction perpendicular to the thickness direction is A, which satisfies a condition of A ≥ 1mm.

The direction perpendicular to the thickness direction can be the radial direction of the lead out hole 2121. Referring to FIG. 8, the direction perpendicular to the thickness direction can be the X direction shown in the figure.

The first surface is the surface of the first limit part 2311 facing the wall portion 211 in the thickness direction. The first limit part 2311 may be disc-shaped, and the first outer edge of the first surface surrounds the outer side of the lead out hole 2121. Optionally, the first limit part 2311 is coaxially arranged with the lead out hole 2121, and at this time, the distance from each position on the first outer edge to the wall surface of the lead out hole 2121 is equal.

In some embodiments, the first limit part 2311 and the lead out hole 2121 are not coaxially arranged, and at this time, the distance from each position on the first outer edge to the wall surface of the lead out hole 2121 may not be equal.

Combined with FIG. 8, the first surface is the upper surface of the first limit part 2311.

A represents the minimum distance between the first outer edge and the wall surface of the lead out hole 2121 along the direction perpendicular to the thickness direction. The minimum distance between the first outer edge and the wall surface of the lead out hole 2121 along the direction perpendicular to the thickness direction can be taken as A=1mm, 1.5mm, 2mm, 2.5mm, 3mm, 3.5mm, 4mm, 4.5mm, 5mm, etc.

The minimum distance between the first outer edge and the wall surface of the lead out hole 2121 in the direction perpendicular to the thickness direction is greater than or equal to 1mm to ensure that the projection of the first limit part 2311 and the projection of the wall portion 211 have sufficient overlap area along the thickness direction of the wall portion 211. When the first terminal portion 231 is subjected to an outward pulling force, the first limit part 2311 can have sufficient area to abut against the wall portion 211 to restrict the electrode terminal 23 from detaching from the lead out hole 2121. If A<1mm, when the first terminal portion 231 is subjected to an outward pulling force, the area of the first limit part 2311 abutting against the wall portion 211 is small, and the first limit part 2311 may deform, thereby causing the electrode terminal 23 to detach from the lead out hole 2121.

Referring to FIGS. 3, 4, 5, 6, 7, and 8, in some embodiments, the first terminal portion 231 includes a body part 2312, which passes through the lead out hole 2121. The first limit part 2311 protrudes from the outer peripheral surface of the body part 2312.

The body part 2312 is the part of the first terminal portion 231 that is inserted into the lead out hole 2121. The first limit part 2311 can be a fan-shaped structure protruding from the outer peripheral surface of the body part 2312, or a ring-shaped structure protruding from the outer peripheral surface of the body part 2312.

By making the first limit part 2311 protrude from the outer peripheral surface of the body part 2312, it is not easy to weaken the strength of the body part 2312, so that the first terminal portion 231 is not easily damaged when subjected to external forces.

In some other embodiments, the body part 2312 is provided with an accommodating groove, and the wall portion 211 extends into the accommodating groove. Along the thickness direction of the wall portion 211, the groove wall of the accommodating groove located on the side of the wall portion 211 facing the electrode assembly forms the first limit part 2311. In this way, the volume of electrode terminal 23 is relatively small.

Referring to FIGS. 3, 4, 5, 6, 7, and 8, in some embodiments, the first terminal portion 231 further includes a body part 2312 and a second limit part 2313. The body part 2312 passes through the lead out hole 2121, and is connected to the first limit part 2311 and the second limit part 2313. Along the thickness direction, the first limit part 2311 and the second limit part 2313 are located on both sides of the wall portion 211 respectively, and the projection of the second limit part 2313 at least partially overlaps with the projection of the wall portion 211.

The body part 2312 is the part of the first terminal portion 231 that is inserted into the lead out hole 2121. The body part 2312 is connected to the first limit part 2311 and the second limit part 2313.

The second limit part 2313 is located outside the shell 21 and is positioned opposite to the wall portion 211 along the thickness direction. In this way, along the thickness direction, the first limit part 2311 and the second limit part 2313 are located on both sides of the wall portion 211 respectively, and the projection of the first limit part 2311 at least partially overlaps with that of the wall portion 211, and the projection of the second limit part 2313 at least partially overlaps with that of the wall portion 211.

The body part 2312 is connected to the first limit part 2311 and the second limit part 2313. The first limit part 2311 can restrict the electrode terminal 23 from leaving the lead out hole 2121 in the direction away from the electrode assembly 22, and the second limit part 2313 can restrict the electrode terminal 23 from leaving the lead out hole 2121 in the direction towards the electrode assembly 22. In this way, the risk of electrode terminal 23 detaching from the lead out hole 2121 is reduced, which is beneficial for ensuring the normal output or input of electrical energy to the battery cell 20, resulting in a longer lifespan of the battery cell 20.

In some embodiments, the first terminal portion 231 and the second terminal portion 232 are combined to form a composite interface, which intersects the outer surface of the electrode terminal 23 at the boundary position. The battery cell 20 also includes a sealing member 24, which seals the boundary position.

The composite interface is the connection interface between the first terminal portion 231 and the second terminal portion 232. The boundary position is the position where the composite interface intersects with the outer contour of electrode terminal 23.

The sealing member 24 sealing boundary position refers to the ability of sealing member 24 to prevent electrolyte from entering the composite interface. For example, sealing member 24 can be placed on the path of electrolyte entering the composite interface to reduce the risk of electrolyte entering the composite interface. That is to say, sealing member 24 may not necessarily cover the boundary position.

The sealing member 24 is a structure that can achieve a sealing effect, such as sealant, sealing gasket, sealing sheet, or sealing ring. The sealing member 24 seals the boundary position to reduce the risk of electrolyte entering the composite interface.

Due to the different materials of the first terminal portion 231 and second terminal portion 232, if the electrolyte enters the composite interface, chemical corrosion will occur. Therefore, by setting the sealing member 24 to seal the boundary position, the risk of electrolyte entering the composite interface is reduced, thereby reducing the risk of chemical corrosion and improving the lifespan of battery cells 20.

Referring to FIGS. 3, 4, 5, 6, 7, and 8, in some embodiments, the sealing member 24 is configured to seal the first terminal portion 231 and the wall portion 211.

The sealing member 24 may be partially disposed between the first terminal portion 231 and the wall portion 211 to seal the first terminal portion 231 and the wall portion 211.

The sealing member 24 not only seals the boundary position, but also seals the first terminal portion 231 and the wall portion 211. One component achieves multiple functions, which is beneficial for simplifying the structure of the battery cell 20.

Referring to FIGS. 3, 4, 5, 6, 7, and 8, in some embodiments, the sealing member 24 includes a third sealing portion 241, which is disposed between the first limit part 2311 and the wall portion 211 to seal the first terminal portion 231 and the wall portion 211.

The third sealing portion 241 can be annular, and is located between the first limit part 2311 and the wall part 211 to reduce the risk of electrolyte entering the lead out hole 2121.

If the electrolyte enters the lead out hole 2121, it needs to pass between the first limit part 2311 and the wall portion 211. By setting a third sealing portion 241 to seal the first limit part 2311 and the wall portion 211, the electrolyte is restricted from entering the lead out hole 2121, thus achieving sealing between the first terminal portion 231 and the wall portion 211.

Referring to FIGS. 3, 4, 5, 6, 7, and 8, in some embodiments, the sealing member 24 further includes a second sealing portion 242, which is connected to the third sealing portion 241 and extends at least partially into the lead out hole 2121.

The second sealing portion 242 extends into the lead out hole 2121 and is positioned between the body part 2312 and the wall portion 211, which is capable of sealing the body part 2312 and the wall portion 211. The second sealing portion 242 can be a cylindrical structure, and is sleeved on the outer side of the body part 2312.

By setting the second sealing portion 242, the second sealing portion 242 extends at least partially into the lead out hole 2121. On the one hand, the second sealing portion 242 can provide positioning for the sealing member 24, thereby facilitating its installation. On the other hand, the second sealing portion 242 can also seal the first terminal portion 231 and the wall portion 211.

In some embodiments, a groove is provided on the side of the second terminal portion 232 facing the first terminal portion 231, and the first limit part 2311 is at least partially accommodated in the groove. The groove side surface of the groove is combined with the outer peripheral surface of the first limit part 2311 to form a composite interface.

Along the thickness direction, the surface of the first limit part 2311 facing the electrode assembly 22 is combined with the bottom surface of the groove to form a first connection interface. The outer peripheral surface of the first limit part 2311 is combined with the groove side surface of the groove to form a second connection interface. In the embodiment of the present disclosure, the composite interface specifically refers to the second connection interface.

A groove is provided on the side of the second terminal portion 232 facing the first terminal portion 231, so as to form a composite interface by combining the groove side surface of the groove with the outer peripheral surface of the first limit part 2311. In this way, the electrolyte can only enter the composite interface from the side of the second terminal portion 232 facing away from the electrode assembly 22, thereby making it more difficult for the electrolyte to enter the composite interface and for the composite interface to be corroded by the electrolyte.

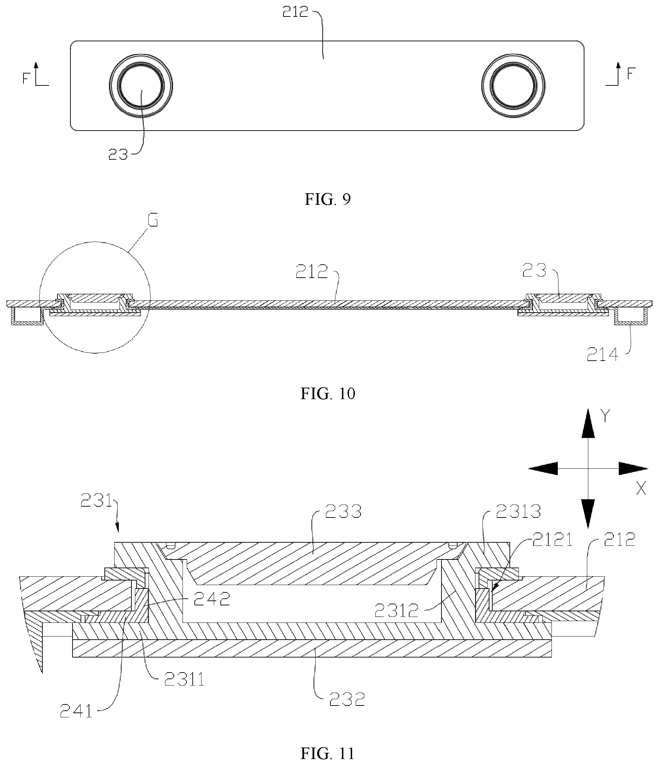

Referring to FIGS. 9, 10 and 11, FIG. 9 is a schematic top view of the end cover 212 provided in some other embodiments of the present disclosure. FIG. 10 is a sectional view at position F-F shown in FIG. 9. FIG. 11 is an enlarged view at position G shown in FIG. 10. In some other embodiments, the first terminal portion 231 and the second terminal portion 232 are stacked along the thickness direction, with the boundary position located on the outer peripheral surface of the electrode terminal 23. Optionally, the second terminal portion 232 is a plate-shaped structure with a thickness direction perpendicular to the composite interface. In this way, it is more convenient to composite the first terminal portion 231 and the second terminal portion 232, and the composite quality is better, thereby making it difficult to separate the first terminal portion 231 and the second terminal portion 232.

Referring to FIGS. 3, 4, 5, 6, 7, 8, and 12, FIG. 12 is a sectional view of the end cover provided in some other embodiments of the present disclosure. In some embodiments, the second terminal portion 232 includes a first portion 2321 and a second portion 2322. Along the thickness direction, the first portion 2321 is stacked with the first terminal portion 231, and the second portion 2322 is arranged around the first limit part 2311. The first portion 2321 and the second portion 2322 together define a groove. The sealing member 24 is located at least partially between the second portion 2322 and the wall portion 211 to make the sealing member 24 seal the boundary position.

Along the thickness direction, the first portion 2321 is the part of the second terminal portion 232 located on the side of the first limit part 2311 facing the electrode assembly 22. The first portion 2321 is stacked with the first terminal portion 231, and the first portion 2321 is closer to the electrode assembly 22 along the thickness direction.

The second portion 2322 is located on the outer periphery of the first portion 2321 to collectively define a groove. In this way, the boundary position is located on the side of the second terminal portion 232 facing away from the electrode assembly 22 in the thickness direction, thereby making it less likely for the electrolyte to enter the composite interface.

Referring to FIG. 8, in some embodiments, a portion of the sealing member 24 is located between the second portion 2322 and the wall portion 211, and another portion is located outside of the second portion 2322 and the wall portion 211.

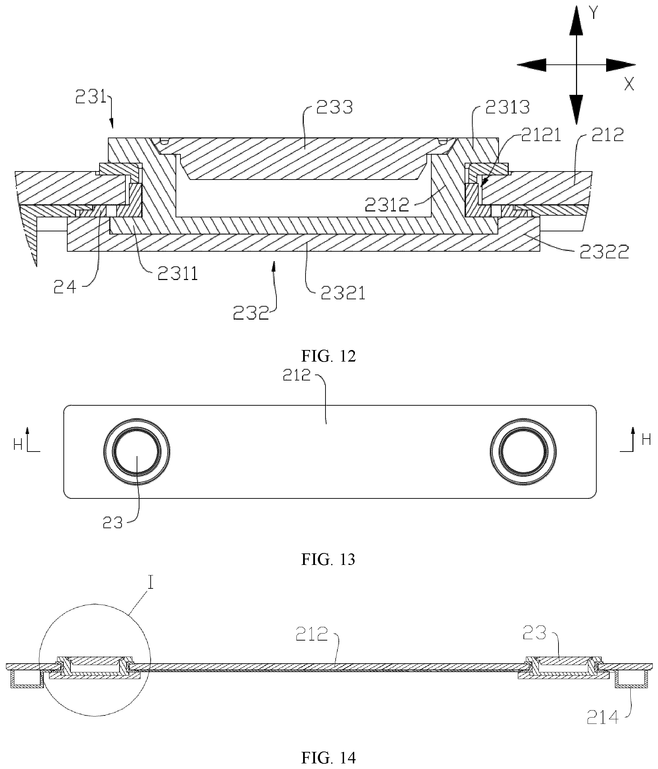

Referring to FIG. 12, in some other embodiments, the sealing member 24 is completely located between the second portion 2322 and the wall portion 211.

The electrolyte can only enter the boundary position through the gap between the second portion 2322 and the wall portion 211. Therefore, by setting the sealing member 24 at least partially between the second portion 2322 and the wall portion 211, the electrolyte cannot enter the boundary position through the gap between the second portion 2322 and the wall portion 211, thus achieving sealing for the boundary position.

Referring to FIGS. 3, 4, 5, 6, 7, and 8, in some embodiments, a portion of the sealing member 24 is located between the first limit part 2311 and the wall portion 211, so that the sealing member 24 covers the boundary position.

The sealing member 24 is partially located between the first limit part 2311 and the wall portion 211, and the sealing member 24 is partially located between the second portion 2322 and the wall portion 211, thus covering the boundary position and achieving better sealing effect at the boundary position.

Referring to FIGS. 3, 4, 5, 6, 7, and 8, in some embodiments, along the thickness direction, the first limit part 2311 has a first surface facing the wall portion 211, and the first outer edge of the first surface is arranged around the lead out hole 2121. The second portion 2322 has a second surface facing the wall portion 211, and the second outer edge of the second surface is arranged around the composite interface. The minimum distance between the first outer edge and the wall surface of the lead out hole 2121 along the direction perpendicular to the thickness direction is A, and the minimum distance between the second outer edge and the composite interface is B, satisfying a condition of A/B ≥ 1/3.

The second surface is the surface of the second portion 2322 facing the wall portion 211 along the thickness direction. The second portion 2322 is arranged around the outer side of the first limit part 2311, so the second outer edge of the second surface is also arranged around the composite interface.

Combined with FIG. 8, the second surface is the upper surface of the second portion 2322.

B represents the minimum distance between the second outer edge and the composite interface in the direction perpendicular to the thickness direction.

A/B represents the ratio of the minimum distance between the first outer edge and the wall surface of the lead out hole 2121, along the direction perpendicular to the thickness direction, to the minimum distance between the second outer edge and the composite interface. Due to the coincidence of the first outer edge with the composite interface, A/B can also represent the ratio of the minimum distance between the composite interface and the wall surface of the lead out hole 2121, along the direction perpendicular to the thickness direction, to the minimum distance between the second outer edge and the composite interface.

The ratio of the minimum distance between the first outer edge and the wall surface of the lead out hole 2121, along the direction perpendicular to the thickness direction, to the minimum distance between the second outer edge and the composite interface can be taken as A/B=1/3, 1/2, 2/3, 3/4, 4/5, 5/6, etc.

Along the direction perpendicular to the thickness direction, the minimum distance between the first outer edge and the hole wall surface of the lead out hole 2121 is greater than or equal to one-third of the minimum distance between the second outer edge and the composite interface. When the first terminal portion 231 is subjected to an outward pulling force, the second portion 2322 can also abut against the sealing member 24, thereby sharing the force on the first limit part 2311 and further reducing the risk of deformation of the first limit part 2311. In addition, A/B ≥ 1/3 ensures that the first limit part 2311 is not too small, thereby giving it high strength to resist deformation.

Referring to FIGS. 3, 4, 5, 6, 7, and 8, in some embodiments, the first surface is flush with the second surface.

The first surface and the second surface are flush, which means that the first surface and the second surface are in the same plane.

When the first surface and the second surface are flush, the composite interface is less susceptible to external forces, and the first terminal portion 231 and the second terminal portion 232 are not easily separated, resulting in a longer lifespan of the battery cell 20.

In some other embodiments, if the first surface and the second surface are not flush, the size of the sealing member 24 can be adjusted so that the first surface is in contact with the wall portion 211 through the sealing member 24, and the second surface is in contact with the wall portion 211 through the sealing member 24.

In some embodiments, the sealing member 24 includes a first sealing portion 243 located between the second portion 2322 and the wall portion 211 along the thickness direction. The minimum distance between the outer peripheral surface of the first sealing portion 243 and the composite interface in the direction perpendicular to the thickness direction is C, which satisfies a condition of C ≥ 1mm.

Referring to FIG. 8, FIG. 8 shows the boundary between the third sealing portion 241 and the first sealing portion 243 by a dashed line.

The minimum distance between the outer peripheral surface of the first sealing portion 243 and the composite interface in the direction perpendicular to the thickness direction can be taken as C=1mm, 1.5mm, 2mm, 2.5mm, 3mm, 3.5mm, 4mm, etc.

In order to match the first sealing portion 243 with the insulating member 214, a notch may be provided on the first sealing portion 243. By making C ≥ 1mm, the first sealing portion 243 can ensure good sealing effect, reduce the risk of electrolyte entering the composite interface, and extend the service life of the battery cell 20.

In some embodiments, the sealing member 24 includes a first sealing portion 243 located between the second portion 2322 and the wall portion 211. The first sealing portion 243 has a third surface facing the wall portion 211 and a fourth surface facing the second portion 2322, with the third outer edge of the third surface surrounding the composite interface and the fourth outer edge of the fourth surface surrounding the third outer edge.

In the embodiment of the present disclosure, the third surface is the upper surface of the first sealing portion 243, and the third surface is attached to the wall portion 211. The fourth surface is the lower surface of the first sealing portion 243, and is attached to the second portion 2322.

The fourth outer edge of the fourth surface surrounds the third outer edge, such that the area of the fourth surface is greater than that of the third surface. One end of the first sealing portion 243 may form a step, slope, or curved surface. At this point, C represents the distance between the third outer edge and the composite interface in the direction perpendicular to the thickness direction.

Of course, in embodiments where the third and fourth surfaces have the same area, C represents the distance between the third outer edge and the composite interface or the distance between the fourth outer edge and the composite interface along the direction perpendicular to the thickness direction.

In addition, in embodiments where the area of the third surface is greater than that of the fourth surface, C represents the distance between the fourth outer edge and the composite interface in the direction perpendicular to the thickness direction.

The distance between the third outer edge and the composite interface in the direction perpendicular to the thickness direction can be taken as C=1mm, 1.5mm, 2mm, 2.5mm, 3mm, 3.5mm, 4mm, etc.

The edge of the first sealing portion 243 may form a stepped, inclined, or curved surface to facilitate coordination with the insulating member 214. The part of the first sealing portion 243 without steps has a better sealing effect. The position of the third surface corresponds to the part without steps. By making C ≥ 1mm, the first sealing portion 243 can ensure good sealing effect, reduce the risk of electrolyte entering the composite interface, and extend the service life of the battery cell 20. In addition, the area of the fourth surface is larger than that of the third surface, which can also improve the sealing effect to a certain extent.

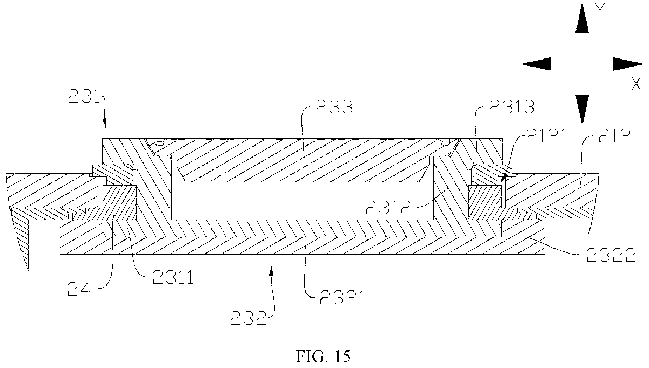

Referring to FIGS. 13, 14 and 15, FIG. 13 is a schematic top view of the end cover 212 provided in some other embodiments of the present disclosure. FIG. 14 is a sectional view at position H-H shown in FIG. 13. FIG. 15 is an enlarged view at position I shown in FIG. 14. In some other embodiments, the battery cell 20 includes a sealing member 24, which is located at least partially on the side of the wall portion 211 facing the electrode assembly 22 along the thickness direction of the wall portion 211, and the projection of the sealing member 24 overlaps at least partially with the projection of the wall portion 211. The projection of the first limit part 2311 overlaps at least partially with the projection of the sealing member 24.

The projection of the sealing member 24 at least partially overlaps with the projection of the wall portion 211, which includes partial overlap between the projection of the sealing member 24 and the projection of the wall portion 211 and complete overlap between the projection of the sealing member 24 and the projection of the wall portion 211. For the complete overlap between the projection of the sealing member 24 and the projection of the wall portion 211, it can also be understood that along the thickness direction, the projection of the sealing member 24 on the wall portion 211 completely falls within the wall portion 211.

The projection of the first limit part 2311 at least partially overlaps with the projection of the sealing member 24, which includes partial overlap between the projection of the first limit part 2311 and the projection of the sealing member 24 and complete overlap between the projection of the first limit part 2311 and the projection of the sealing member 24.

When the first terminal portion 231 is subjected to an outward pulling force, the first limit part 2311 can be pressed against the sealing member 24, and the sealing member 24 can be pressed against the wall portion 211 to restrict the first terminal portion 231 from detaching from the lead out hole 2121 in the direction away from the electrode assembly 22. In this way, the composite interface between the first terminal portion 231 and the second terminal portion 232 is less susceptible to external forces, thereby making it difficult for the first terminal portion 231 and the second terminal portion 232 to separate, and resulting in a longer lifespan of the battery cell 20. The sealing member 24 not only abuts against and limits the first limit part 2311, but also seals the first terminal portion 231 and the wall portion 211. One component achieves multiple functions, which is beneficial for simplifying the structure of the battery cell 20. In some embodiments, the projection of the first limit part 2311 and the projection of the wall portion 211 do not overlap along the thickness direction.

The projection of the first limit part 2311 and the projection of the wall portion 211 do not overlap along the thickness direction, which means that along the thickness direction, the projection of the first limit part 2311 and the projection of the wall portion 211 are staggered.

Along the thickness direction, the projection of the first limit part 2311 partially overlaps with the projection of the sealing member 24, the projection of the sealing member 24 partially overlaps with the projection of the wall portion 211, and the projection of the first limit part 2311 does not overlap with the projection of the sealing member 24. In this way, the size of the first limit part 2311 can be reduced.

In some embodiments, the first limit part 2311 is located on the side of the sealing member 24 facing the electrode assembly 22 along the thickness direction.

The first limit part 2311 is set on the side of the sealing member 24 facing the electrode assembly 22. When the first terminal portion 231 is subjected to an outward pulling force, the first limit part 2311 can more stably support the sealing member 24.

In some other embodiments, the first limit part 2311 can also be snapped to the sealing member 24, so that the projection of the first limit part 2311 along the thickness direction at least partially overlaps with the projection of the sealing member 24 along the thickness direction.

In some other embodiments, along the thickness direction of the wall portion 211, the sealing member 24 is at least partially located on the side of the wall portion 211 facing the electrode assembly 22, and the projection of the sealing member 24 and the projection of the wall portion 211 overlap at least partially. The body part 2312 is provided with an accommodating groove, and the sealing member 24 extends into the accommodating groove. Along the thickness direction of the wall portion 211, the groove wall of the accommodating groove located on the side of the sealing member 24 facing the electrode assembly forms the first limit part 2311. In this way, the volume of electrode terminal 23 is relatively small.

The embodiment of the present disclosure also provides a battery 100, which includes the above-mentioned battery cell 20.

The embodiment of the present disclosure also provides an electrical equipment, which includes the battery 100 mentioned above, and the battery 100 is configured to provide electrical energy for the electrical equipment.

According to some embodiments of the present disclosure, FIGS. 3-8 are referred to.

The embodiment of the present disclosure provides a battery cell 20 comprising a shell 21, an electrode assembly 22, and an electrode terminal 23. The shell 21 has a wall portion 211, which is provided with a lead out hole 2121. The electrode assembly 22 is housed inside the shell 21. The electrode terminal 23 includes a first terminal portion 231 and a second terminal portion 232, wherein the first terminal portion 231 and the second terminal portion 232 are made of different materials and are composite with each other. The first terminal portion 231 penetrates through the lead out hole 2121, and the second terminal portion 232 is electrically connected to the electrode assembly 22. The first terminal portion 231 includes a first limit part 2311, which is located on the side of the wall portion 211 facing the electrode assembly 22 along the thickness direction of the wall portion 211. The projection of the first limit part 2311 and the projection of the wall portion 211 at least partially overlap. The electrode terminal 23 of the battery cell 20 includes a first terminal portion 231 and a second terminal portion 232 of different materials, so as to weld the first terminal portion 231 to the busbar component and the second terminal portion 232 to the electrode assembly 22. Along the thickness direction of the wall portion 211, the first terminal portion 231 has the first limit part 2311 located on the side of the wall portion 211 facing the electrode assembly 22. The projection of the first limit part 2311 overlaps at least partially with the projection of the wall portion 211, so that when the first terminal portion 231 is subjected to an outward pulling force, the first limit part 2311 can be pressed against the wall portion 211 to restrict the first terminal portion 231 from leaving the lead out hole 2121 in a direction away from the electrode assembly 22. In this way, the composite interface between the first terminal portion 231 and the second terminal portion 232 is less susceptible to external forces, thereby making it difficult for the first terminal portion 231 and the second terminal portion 232 to separate, and resulting in a longer lifespan of the battery cell 20.

The first terminal portion 231 and the second terminal portion 232 are combined to form a composite interface, which intersects the outer surface of the electrode terminal 23 at the boundary position. The battery cell 20 also includes a sealing member 24, which seals the boundary position. Due to the different materials of the first terminal portion 231 and second terminal portion 232, if the electrolyte enters the composite interface, chemical corrosion will occur. Therefore, by setting the sealing member 24 to seal the boundary position, the risk of electrolyte entering the composite interface is reduced, thereby reducing the risk of chemical corrosion and improving the lifespan of battery cells 20.

The above is only preferred embodiments of the present disclosure and is not intended to limit it. For those skilled in the art, the present disclosure may undergo various modifications and variations. Any modifications, equivalent replacements, improvements, etc. made within the spirit and principles of the present disclosure shall be included within the scope of protection of the present disclosure.

## Claims

1. A battery cell, comprising:
a shell, having a wall portion, wherein the wall portion is provided with a lead out hole;
an electrode assembly, housed inside the shell; and
an electrode terminal, comprising a first terminal portion and a second terminal portion, wherein the first terminal portion and the second terminal portion are made of different materials and are composite with each other; and the first terminal portion passes through the lead out hole, and the second terminal portion is electrically connected to the electrode assembly, wherein
the first terminal portion comprises a first limit part, wherein the first limit part is configured to restrict the first terminal portion from leaving the lead out hole in a direction facing away from the electrode assembly along a thickness direction of the wall portion.

2. The battery cell according to claim 1, wherein along the thickness direction of the wall portion, the first limit part is located on a side of the wall portion facing the electrode assembly, and a projection of the first limit part and a projection of the wall portion at least partially overlap.

3. The battery cell according to claim 2, wherein, wherein the first terminal portion and the second terminal portion are combined to form a composite interface, wherein the composite interface intersects an outer surface of the electrode terminal at a boundary position; and
the battery cell further comprises a sealing member, wherein the sealing member seals the boundary position.

4. The battery cell according to claim 3, wherein a groove is provided on one side of the second terminal portion facing the first terminal portion, and the first limit part is at least partially accommodated in the groove, wherein a side surface of the groove is combined with an outer peripheral surface of the first limit part to form the composite interface.

5. The battery cell according to claim 4, wherein the second terminal portion comprises a first portion and a second portion, wherein along the thickness direction, the first portion is stacked with the first terminal portion, and the second portion surrounds the first limit part; the first portion and the second portion jointly define the groove; and the sealing member is at least partially located between the second portion and the wall portion to seal the boundary position by the sealing member.

6. The battery cell according to claim 5, wherein a part of the sealing member is located between the first limit part and the wall portion, so that the sealing member covers the boundary position.

7. The battery cell according to claim 6, wherein a part of the sealing member extends into the lead out hole.

8. The battery cell according to any one of claims 5-7, wherein along the thickness direction, the first limit part has a first surface facing the wall portion, and a first outer edge of the first surface is arranged around the lead out hole; the second portion has a second surface facing the wall portion, and a second outer edge of the second surface is arranged around the composite interface; and
a minimum distance between the first outer edge and a wall surface of the lead out hole along a direction perpendicular to the thickness direction is A, and a minimum distance between the second outer edge and the composite interface is B, satisfying a condition of A/B ≥ 1/3.

9. The battery cell according to claim 8, wherein the first surface is flush with the second surface.

10. The battery cell according to any one of claims 5-9, wherein the sealing member comprises a first sealing portion located between the second portion and the wall portion along the thickness direction; and
a minimum distance between an outer peripheral surface of the first sealing portion and the composite interface in a direction perpendicular to the thickness direction is C, which satisfies a condition of C ≥ 1mm.

11. The battery cell according to any one of claims 5-10, wherein the sealing member comprises a first sealing portion located between the second portion and the wall portion; and the first sealing portion has a third surface facing the wall portion and a fourth surface facing the second portion, with a third outer edge of the third surface surrounding the composite interface and a fourth outer edge of the fourth surface surrounding the third outer edge.

12. The battery cell according to any one of claims 2-11, wherein along the thickness direction, the first limit part has a first surface facing the wall portion, and a first outer edge of the first surface is arranged around the lead out hole; and along a direction perpendicular to the thickness direction, a minimum distance between the first outer edge and a wall surface of the lead out hole is A, which satisfies a condition of A ≥ 1mm.

13. The battery cell according to any one of claims 1-12, wherein the first terminal portion comprises a body part, wherein the body part passes through the lead out hole, and the first limit part protrudes from an outer peripheral surface of the body part.

14. The battery cell according to any one of claims 1-13, wherein the first terminal portion further comprises a body part and a second limit part, wherein the body part passes through the lead out hole, and the body part connects the first limit part and the second limit part; and along the thickness direction, the first limit part and the second limit part are located on both sides of the wall portion respectively, and a projection of the second limit part overlaps at least partially with a projection of the wall portion.

15. The battery cell according to claim 1, 13 or 14, wherein the battery cell comprises a sealing member, wherein the sealing member is located at least partially on a side of the wall portion facing the electrode assembly along the thickness direction of the wall portion, and a projection of the sealing member overlaps at least partially with a projection of the wall portion; and a projection of the first limit part overlaps at least partially with the projection of the sealing member.

16. The battery cell according to claim 15, wherein along the thickness direction, the projection of the first limit part and the projection of the wall portion do not overlap.

17. The battery cell according to claim 15 or 16, wherein along the thickness direction, the first limit part is located on a side of the sealing member facing the electrode assembly.

18. A battery, comprising the battery cell according to any one of claims 1-17.

19. An electrical equipment, comprising the battery according to claim 18, wherein the battery is configured to provide electric energy for the electrical equipment.
